# EUROPÄISCHE PATENTSCHRIFT

(11) **EP 0 600 261 B1**
(45) Veröffentlichungstag und Bekanntmachung des Hinweises auf die Patenterteilung: **21.01.1998**
(21) Anmeldenummer: 93118051.7
(22) Anmeldetag: 08.11.1993
(51) Int. Cl.: C08J 9/00, C08L 83/06

(54) **Polysiloxan-Polyoxyalkylen-Blockmisch-polymerisat mit unterschiedlichen Polyoxyalkylenblöcken im durchschnittlichen Molekül**
Polysiloxane-polyoxyalkylene block copolymer with different polyoxyalkylene blocks in average molecule
Polymère segmenté de polysiloxane-polyoxyalkylène avec des segments différents de polyoxyalkylène dans la molécule moyenne

(30) Priorität: 20.11.1992 DE 4239054
(43) Veröffentlichungstag der Anmeldung: 08.06.1994
(73) Patentinhaber: Th. Goldschmidt AG, 45127 Essen (DE)
(72) Erfinder: Burkhart, Georg, Dr., D-45239 Essen (DE); Langenhagen, Rolf-Dieter, D-45529 Hattingen (DE); Weier, Andreas, Dr., D-45289 Essen (DE); Zellmer, Volker, Dr., D-46240 Bottrop (DE)

(56) Entgegenhaltungen:
- EP-A- 0 493 836
- EP-A- 0 499 200
- DE-A- 1 694 366
- DE-A- 3 234 462
- DE-A- 3 338 106

## Beschreibung

Die Erfindung betrifft Polysiloxan-Polyoxyalkylen-Blockmischpolymerisate mit unterschiedlichen Polyoxyalkylenblöcken im durchschnittlichen Molekül und deren Verwendung bei der Herstellung von flexiblen Polyurethanschaumstoffen.

Bei der Herstellung von Polyurethanschaumstoffen werden dem Gemisch der Reaktionsprodukte Polysiloxan-Polyoxyalkylen-Blockmischpolymerisate zugesetzt, welche die Ausbildung eines gleichmäßigen Porengefüges ermöglichen und den gebildeten Schaum bis zur Beendigung der Reaktion stabilisieren. Jedoch sind nicht alle Polysiloxan-Polyoxyalkylen-Blockmischpolymerisate in gleicher Weise geeignet. Um als Polyurethan-Schaumstabilisatoren brauchbar zu sein, müssen die Polyoxyalkylenblöcke und der Polysiloxanblock der Blockmischpolymerisate in einem ausgewogenen Verhältnis vorliegen, wobei auch der Aufbau der beiden Blöcke von großer Bedeutung ist. Es gibt dabei für den Aufbau eines möglichst wirksamen Schaumstabilisators eine Vielzahl von Variablen sowohl für den Polyoxyalkylenblock wie für den Polysiloxanblock:

Der Polyoxyalkylenblock kann aus verschiedenen Oxyalkyleneinheiten, vornehmlich aus Oxyethylen-, Oxypropylen- und Oxybutyleneinheiten zusammengesetzt sein. Dabei kann das Gewichtsverhältnis dieser Einheiten zueinander sowie das Molgewicht des Polyoxyalkylenblockes variiert werden. Von Bedeutung ist auch die Endgruppe des Polyoxyalkylenblockes, die in bezug auf die Polyurethanbildung reaktiv (z.B. OH-Gruppe) oder inert (z.B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si-Bindung verknüpft sein. Dabei können auch unterschiedliche Polyoxyalkylenblöcke an den Polysiloxanblock gebunden sein.

Der Polysiloxanblock kann in bezug auf Art und Anteil der Si-Einheiten variiert werden. Der Siloxanblock kann geradkettig oder verzweigt sein und unterschiedliches Molekulargewicht aufweisen. Die Polyoxyalkylenblöcke können end- und/oder seitenständig an den Polysiloxanblock gebunden sein.

Vorhersagen über Wirksamkeit eines Polysiloxan-Polyoxyalkylen-Blockmischpolymerisates als Schaumstabilisator können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Auffindung spezieller Variationsmöglichkeiten und entsprechender Blockmischpolymerisate eine fortschrittsraffende und somit erfinderische Leistung dar. Polysiloxan-Polyoxyalkylen-Blockmischpolymerisate, welche im durchschnittlichen Molekül unterschiedliche Polyoxyalkylenreste aufweisen, sind bereits wiederholt beschrieben worden. Aus der großen Anzahl entsprechender Veröffentlichungen sollen stellvertretend die folgenden Schriften genannt werden:

DE-PS 15 70 647: Chlorpolysiloxanylsulfate werden mit Gemischen von Alkylenoxid-Addukten umgesetzt, welche aus
50 bis 95 OH-Äquivalentprozent Polyalkylenglykolmonoethern, die aus Ethylenoxid- und Propylenoxideinheiten bestehen und einen Gehalt von 40 bis 70 Gew.-% Oxypropyleneinheiten und ein Molgewicht von 1000 bis 3000 aufweisen, deren Hydroxylgruppen vorzugsweise sekundär sind, und
5 bis 50 OH-Äquivalentprozent Alkylenoxid-Addukten mehrwertiger Hydroxylverbindungen eines Molgewichtes von 130 bis 3500, deren Polyalkylenglykolkomponente aus Ethylenoxid- und/oder Propylenoxideinheiten bestehen und die ein OH-Äquivalentgewicht bis zu 1750 haben und deren Hydroxylgruppen vorzugsweise sekundär sind, bestehen und
wobei die Mengenverhältnisse so gewählt sind, daß auf ein Säureäquivalent des Chlorpolysiloxanylsulfates höchstens 1,4, vorzugsweise 1,05 bis 1,2 OH-Äquivalente kommen.

DE-PS 16 94 366: Es werden als Schaumstabilisatoren solche Polysiloxan-Polyoxyalkylen-Blockmischpolymerisate verwendet, deren Polysiloxanblock in an sich bekannter Weise aufgebaut ist, deren Polyoxyalkylenblock jedoch aus

| | |
|---|---|
| 25 bis 70 Gew.-% | eines Polyoxyalkylens mit einem durchschnittlichen Molekulargewicht von 1600 bis 4000 und einem Ethylenoxidgehalt von 20 bis 100 Gew.-%, Rest Propylenoxid und gegebenenfalls höhere Alkylenoxide, und |
| 30 bis 75 Gew.-% | eines Polyoxyalkylens mit einem durchschnittlichen Molekulargewicht von 400 bis 1200 und einem Ethylenoxidgehalt von 65 bis 100 Gew.-%, Rest Propylenoxid und gegebenenfalls höhere Alkylenoxide, besteht. |

DE-OS 25 41 865: Die Polysiloxan-Polyoxyalkylen-Blockmischpolymerisate sind bezüglich ihrer Polyoxyalkylenblöcke so definiert, daß der eine Polyoxyalkylenblock ein mittleres Molgewicht von 900 bis 1300 hat und zu 30 bis 55 Gew.-% aus Ethylenoxid, Rest Propylenoxid, und der andere Polyoxyalkylenblock ein mittleres Molgewicht von 3800 bis 5000 hat und zu 30 bis 50 Gew.-% aus Ethylenoxid, Rest Propylenoxid, besteht.

EP-OS 0 275 563: Das in dieser veröffentlichten europäischen Patentanmeldung beschriebene Blockmischpolymerisat umfaßt drei verschiedene Polyoxyalkylenblöcke, nämlich einen Block, welcher 20 bis 60 Gew.-% Oxyethyleneinheiten enthält, bei einem Molgewicht von 3000 bis 5500, einen weiteren Block mit 20 bis 60 Gew.-% Oxyethyleneinheiten und einem Molgewicht von 800 bis 2900 und einen dritten Block nur aus Polyoxypropyleneinheiten und einem Molgewicht von 130 bis 1200.

Der Erfindung liegt das technische Problem zugrunde, Polysiloxan-Polyoxyalkylen-Blockmischpolymerisate zu entwickeln, deren anwendungstechnische Eigenschaften weiter optimiert sind, wobei insbesondere angestrebt wurde, einen Stabilisator hoher Aktivität aufzufinden, der auch im unteren Raumgewichtsbereich flexible PUR-Schäume sehr guter Zellfeinheit herzustellen gestattet.

Diese Verbesserung der Eigenschaften wird bei solchen Polysiloxan-Polyoxyalkylen-Blockmischpolymerisaten gefunden, die erfindungsgemäß der folgenden allgemeinen, durchschnittlichen Formel entsprechen: 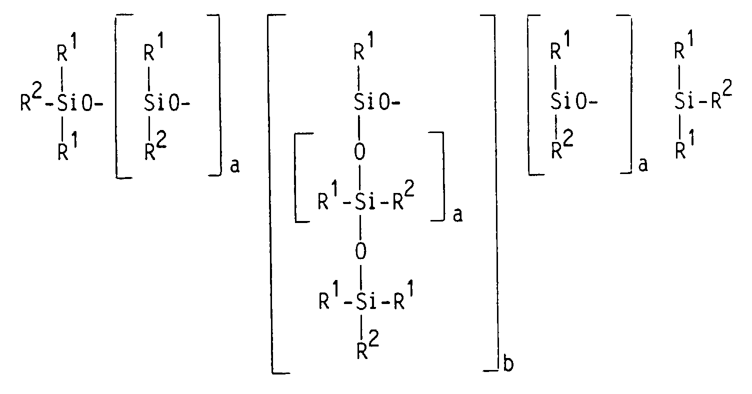 wobei
- R¹: ein Alkylrest mit 1 bis 4 Kohlenstoffatomen oder ein Phenylrest ist, jedoch mindestens 90 % der Reste R¹ Methylreste sind,
- R²: die Bedeutung des Restes R¹ oder des Restes -R⁴ ₓO-R³ hat,
wobei
R⁴ ein zweiwertiger Alkylenrest, der auch verzweigt sein kann, ist,
x einen Wert von 0 oder 1 hat und
R³ ein Gemisch von
(a) mindestens einem Polyoxyalkylenrest A eines mittleren Molgewichtes von 350 bis 6000, bestehend aus > 90 bis 100 Gew.-% Oxyethyleneinheiten und 0 bis < 10 Gew.-% Oxypropyleneinheiten,
(b) mindestens einem Polyoxyalkylenrest B eines mittleren Molgewichtes von 700 bis 5500, bestehend aus 30 bis 90 Gew.-% Oxyethyleneinheiten und 70 bis 10 Gew.-% Oxypropyleneinheiten, und gegebenenfalls
(c) einem oder mehreren Polyoxyalkylenrest(en) (en) C eines mittleren Molgewichtes von 500 bis 5000, bestehend aus 0 bis < 30 Gew.-% Oxyethyleneinheiten und 100 bis > 70 Gew.-% Oxypropyleneinheiten,
mit der Maßgabe, daß
(1) im durchschnittlichen Blockmischpolymerisat mindestens ein Rest -R⁴ ₓOR³ vorhanden ist,
(2) im durchschnittlichen Blockmischpolymerisat mindestens 3 Polyoxyalkylenreste unterschiedlichen mittleren Molekulargewichtes und/oder unterschiedlichen Oxyethylengehaltes vorhanden sind und
(3) wenn in Polyoxyalkylenrest C vorhanden ist, der Polyoxyalkylenrest A ein mittleres Molekulargewicht von 700 nicht unterschreiten darf, und
(4) wenn Polyoxyalkylenreste A und C vorhanden sind, mindestens einer dieser Reste ein mittleres Molekulargewicht von 700 nicht unterschreiten darf,
(5) das Verhältnis der Polyoxyalkylenreste A : B : C (in Mol-%) 5 bis 60 : 10 bis 95 : 0 bis 80, wobei die Summe der Mol-% 100 ergeben muß, beträgt,
- b: einen Wert von 0 bis 10 hat,
- a: einen Wert von 10 bis 100 hat, wenn b = 0 ist, oder
einen Wert von 3 bis 70 hat, wenn b > 0 und ≤ 4 ist, oder
einen Wert von 3 bis 30 hat, wenn b > 4 ist.

Dabei können in den Polyoxyalkylenresten B und C jeweils bis zu 20 Gew.-% der Oxypropyleneinheiten durch Oxybutyleneinheiten ersetzt sein.

Der Rest R¹ ist vorzugsweise ein Methylrest.

Der Rest R⁴ ist vorzugsweise ein Rest der Formel -(CH₂)₂- oder -(CH₂)₃-.

Vorzugsweise entsprechen die Polyoxyalkylenreste R³ der Formel (CₘH₂ₘO-)ₙR⁵, wobei die Indices n und m so gewählt sind, daß die Bedingungen hinsichtlich der Zusammensetzung und des jeweiligen Molgewichtes der verschiedenen Polyoxyalkylenreste erfüllt sind, und R⁵ ein Wasserstoffrest, ein Alkylrest mit 1 bis 4 Kohlenstoffatomen, ein Acylrest oder ein -O-CO-NH-R⁶-Rest ist, wobei R⁶ einen Alkylrest mit 2 bis 6 Kohlenstoffatomen oder einen Arylrest, vorzugsweise einen Phenylrest, bedeutet. Die unterschiedlichen Oxyalkylenreste können statistisch verteilt oder blockweise angeordnet sein.

Für die Polyoxyalkylenreste gelten folgende bevorzugte Bereiche:

| | | |
|---|---|---|
| Polyoxyalkylenrest A | mittleres Molgewicht | 350 bis 2000 |
| | Gehalt an Oxyethyleneinheiten | 95 bis 100 |
| | Gehalt an Oxypropyleneinheiten | 5 bis 0 |
| | | |
| Polyoxyalkylenrest B | mittleres Molgewicht | 1300 bis 4500 |
| | Gehalt an Oxyethyleneinheiten | 40 bis 70 |
| | Gehalt an Oxypropyleneinheiten und gegebenenfalls Oxybutyleneinheiten | 60 bis 30 |
| | | |
| Polyoxyalkylenrest C | mittleres Molgewicht | 800 bis 2500 |
| | Gehalt an Oxyethyleneinheiten | 0 bis 20 |
| | Gehalt an Oxypropyleneinheiten und gegebenenfalls Oxybutyleneinheiten | 100 bis 80 |

Im durchschnittlichen Blockmischpolymerisat müssen mindestens 3 Polyoxyalkylenreste unterschiedlichen mittleren Molekulargewichtes und/oder unterschiedlichen Oxyethylengehaltes vorhanden sein. Das bedeutet, daß für den Fall, daß kein Polyoxyalkylenrest C vorhanden ist, entweder mindestens 2 Polyoxyalkylenreste A und 1 Polyoxyalkylenrest B oder mindestens 1 Polyoxyalkylenrest A und 2 Polyoxyalkylenreste B vorhanden sein müssen, die sich bezüglich ihres mittleren Molekulargewichtes und/oder ihres Oxyethylengehaltes im Rahmen der Definition (a) und (b) befinden müssen.

Dabei gelten die Bedingungen (3) und (4), die festlegen, daß,
(3) wenn kein Polyoxyalkylenrest C vorhanden ist, der Polyoxyalkylenrest A ein mittleres Molekulargewicht von 700 nicht unterschreiten darf, und
(4) wenn Polyoxyalkylenreste A und C vorhanden sind, mindestens einer dieser Reste ein mittleres Molekulargewicht von 700 nicht unterschreiten darf.

Die Bedingungen der Molgewichte der Reste A, B und C sollen in folgender Tabelle noch verdeutlicht werden:

| Vorhandene Polyoxyalkylenreste | Molgewichtsbereich der Reste | | |
|---|---|---|---|
| | A | B | C |
| A und B | 700 - 6000 | 700 - 5500 | |
| A, B und C | 700 - 6000 | 700 - 5500 | 500 - 5000 |
| oder | 350 - 6000 | 700 - 5500 | 700 - 5000 |

Das Verhältnis der Polyoxyalkylenreste A : B : C beträgt (in Mol-%) 5 bis 60 : 10 bis 95 : 0 bis 80, wobei die Summe der Mol-% 100 ergeben muß.

Das Verhältnis A : B : C ist vorzugsweise 5 bis 40 : 20 bis 60 : 40 bis 75, wobei die Summe der Mol-% 100 ergeben muß.

Besonders bevorzugt ist ein Verhältnis von 10 bis 30 : 20 bis 40 : 50 bis 75, wobei die Summe der Mol-% 100 ergeben muß.

Die erfindungsgemäßen Blockmischpolymerisate können nach an sich bekannten Verfahren hergestellt werden. Sind die Polyoxyalkylenblöcke durch eine SiC-Bindung mit dem Polysiloxangerüst verknüpft, addiert man Polyoxyalkylenether von Alkoholen mit einer olefinischen Doppelbindung an eine SiH-Gruppe eines Wasserstoffsiloxans in Gegenwart von Hydrosilylierungskatalysatoren, insbesondere Platinkatalysatoren. Sind die Polyoxyalkylenblöcke durch eine SiOC-Bindung mit dem Polysiloxangerüst verknüpft, setzt man Chlorpolysiloxanylsulfate mit Polyethermonoolen unter Neutralisation der freiwerdenden Mineralsäure um. Es ist auch möglich, die entsprechenden Alkoxysiloxane mit Polyethermonoolen umzuestern. Entsprechende Herstellungsverfahren sind in der eingangs zitierten Literatur beschrieben.

Die erfindungsgemäßen Polysiloxan-Polyoxyalkylen-Blockmischpolymerisate haben hervorragende anwendungstechnische Eigenschaften und können auch in Kombination mit anderen Stabilisatoren des Standes der Technik eingesetzt werden. Die mit diesen Polymerisaten als Schaumstabilisatoren hergestellten Weichschäume zeigen ein hervorragendes Verhältnis von Zellfeinheit zu Stabilisierung.

Sie werden bei der Herstellung von PUR-Schäumen in üblichen Mengen eingesetzt. Üblich sind z.B. etwa 0,3 bis 2,5 Gew.-%, bezogen auf Polyol. Vorzugsweise verwendet man 0,8 bis 1,5 Gew.-% Stabilisator.

In den folgenden Beispielen werden die anwendungstechnischen Eigenschaften der erfindungsgemäßen Polymerisate noch näher erläutert.

### Beispiel 1

In einem mit Rührer, Thermometer, Gaseinleitung und Destillationsaufsatz versehenen Kolben werden 37,2 g (= 0,0188 Mol) eines Polyethers mit der mittleren Formel

CH₂=CH-CH₂O-(C₂H₄O-)₄₀(C₃H₆O-)_{2,6}CH₃ (Typ A),

17,5 g (= 0,0125 Mol) eines Polyethers mit der mittleren Formel

CH₂=CH-CH₂O-(C₂H₄O-)₁₂(C₃H₆O-)₁₄H (Typ B),

367,5 g (= 0,0938 Mol) eines Polyethers mit der mittleren Formel

CH₂=CH-CH₂O-(C₂H₄O-)₄₂(C₃H₆O-)₃₄COCH₃ (Typ B)

und 500 ml Toluol vorgelegt. Zur azeotropen Trocknung des Polyethergemisches werden 150 ml Toluol unter Stickstoffatmosphäre abdestilliert. Danach wird der Kolben mit einem Rückflußkühler und einem Tropftrichter versehen und durch die Apparatur weiter Stickstoff geleitet. Bei einer Temperatur von 105°C werden 0,3 g einer 10 %igen Lösung von H₂PtCl₆.6H₂O in i-Propanol zugesetzt und 5 Min. eingerührt. Nun werden 80,4 g (= 0,1 Mol SiH) eines Siloxans mit der durchschnittlichen Formel

(CH₃)₃SiO-[(CH₃)₂SiO-]₅₈[(CH₃)HSiO-]₆Si(CH₃)₃

in 20 Min. zugetropft. Man läßt 4 Std. nachreagieren und erreicht einen SiH-Umsatz von 99,1 % (bestimmt über in alkalischem Medium mit n-Butanol abspaltbarem Wasserstoff).

### Beispiel 2

In einem Kolben, der mit Tropftrichter, Rührer, Thermometer, Gaseinleitung und Rückflußkühler versehen ist, werden 7,5 g (= 0,0125 Mol) eines Polyethers mit der mittleren Formel

CH₂=CH-CH₂O-(C₂H₄O-)₁₂CH₃ (Typ A),

301,8 g (= 0,075 Mol) eines Polyethers mit der mittleren Formel

CH₂=CH-CH₂O-(C₂H₄O-)₄₅(C₃H₆O-)₃₄CH₃ (Typ B),

56,6 g (= 0,0375 Mol) eines Polyethers mit der mittleren Formel

CH₂=CH-CH₂O-(C₂H₄O-)₅(C₃H₆O-)₂₁CH₃ (Typ C)

und 16 mg C₂H₄.C₅H₅N.PtCl₂ vorgelegt. Durch die Apparatur wird Stickstoff geleitet. Nach Aufheizen auf 120°C werden 65,5 g (= 0,1 Mol SiH) eines Siloxans mit der durchschnittlichen Formel

H(CH₃)₂SiO-[(CH₃)₂SiO-]₈₀[(CH₃)HSiO-]₈Si(CH₃)₂H

zugetropft. Man läßt 2,5 Std. nachreagieren. Der SiH-Umsatz beträgt 99,4 %.

### Beispiel 3

In einem Kolben, der mit Rührer, Thermometer, Gaseinleitung und Rückflußkühler versehen ist, werden 18,7 g (= 0,0188 Mol) eines Polyethers mit der mittleren Formel

CH₂=CH-CH₂O-(C₂H₄O-)₂₁CH₃ (Typ A),

35,0 g (= 0,025 Mol) eines Polyethers mit der mittleren Formel

CH₂=CH-CH₂O-(C₂H₄O-)₁₂(C₃H₆O-)₁₄H (Typ B),

75,6 g (= 0,025 Mol) eines Polyethers mit der mittleren Formel

CH₂=CH-CH₂O-(C₂H₄O-)₄₆(C₃H₆O-)₁₆CH₃ (Typ B),

84,8 g (= 0,0563 Mol) eines Polyethers mit der mittleren Formel

CH₂=CH-CH₂O-(C₂H₄O-)₁(C₃H₆O-)₂₄CH₃ (Typ C)

und 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

vorgelegt. Durch die Apparatur wird Stickstoff geleitet. Nach Aufheizen auf 110°C werden 12 mg cis-[PtCl₂(NH₃)₂] zugesetzt. Nach einer leicht exothermen Reaktion wird der Ansatz klar. Man läßt 3,5 Std. nachreagieren. Der SiH-Umsatz beträgt 98,9 %.

### Beispiel 4

In einem mit Rührer, Thermometer, Gaseinleitung und Destillationsaufsatz versehenen Kolben werden 23,2 g (= 0,0385 Mol) eines Polyethers mit der mittleren Formel

C₄H₉O-(C₂H₄O-)₁₂H (Typ A),

22,0 g (= 0,0055 Mol) eines Polyethers mit der mittleren Formel

C₄H₉O-(C₂H₄O-)₈₂(C₃H₆O-)_{5,4}H (Typ A),

198,2 g (= 0,0661 Mol) eines Polyethers mit der mittleren Formel

C₄H₉O-(C₂H₄O-)₂₃(C₃H₆O-)₃₃H (Typ B)

und 1100 ml Toluol vorgelegt. Unter Stickstoffabdeckung werden 150 ml Toluol zur azeotropen Trocknung des Polyethergemisches abdestilliert. Bei 50°C wird der Destillationsaufsatz gegen einen Rückflußkühler ausgetauscht. Anschließend werden 65,8 g (= 0,1 Mol SiX) eines Chlorpolysiloxanylsulfats mit der durchschnittlichen Formel 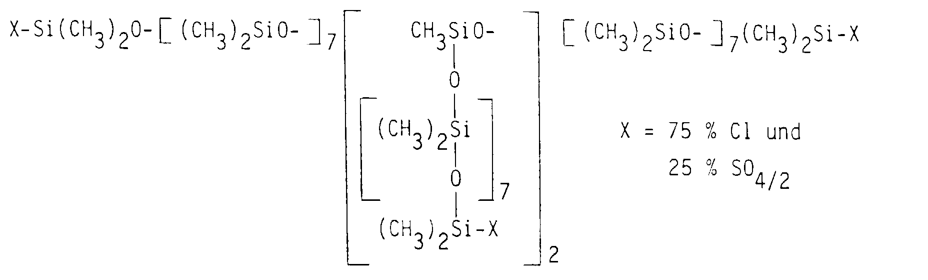 zugesetzt. Dann wird bei 60°C Ammoniakgas eingeleitet, bis der Kolbeninhalt ammoniakalisch reagiert. Man läßt noch eine weitere Stunde unter schwachem Einleiten von Ammoniakgas nachreagieren. Anschließend wird das ausgefallene Salz abfiltriert. Danach wird bei 70°C und 20 mbar Toluol abdestilliert.

### Beispiel 5

Entsprechend den Bedingungen von Beispiel 1 werden 3,8 g (= 0,0063 Mol) eines Polyethers mit der mittleren Formel

CH₂=CH-CH₂O-(C₂H₄O-)₁₂CH₃ (Typ A),

12,4 g (= 0,0063 Mol) eines Polyethers mit der mittleren Formel

CH₂=CH-CH₂O-(C₂H₄O-)₄₀(C₃H₆O-)_{2,6}CH₃ (Typ A),

46,0 g (= 0,0313 Mol) eines Polyethers mit der mittleren Formel

CH₂=CH-CH₂O-(C₂H₄O-)₁₆(C₃H₆O-)₁₂CH₃ (Typ B),

75,2 g (= 0,0188 Mol) eines Polyethers mit der mittleren Formel

CH₂=CH-CH₂O-(C₂H₄O-)₄₅(C₃H₆O-)₃₄H (Typ B)

und 94,4 g (= 0,0625 Mol) eines Polyethers mit der mittleren Formel

CH₂=CH-CH₂O-(C₂H₄O-)₅(C₃H₆O-)₂₁CH₃ (Typ C)

mit 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

unter Zusatz von 400 ml Toluol (davon 150 ml zum azeotropen Trocknen) in Gegenwart von 0,18 g einer 10 %igen Lösung von H₂PtCl₆.6H₂O in i-Propanol umgesetzt. Der SiH-Umsatz erreicht 98,5 %.

### Beispiel 6 (nicht erfindungsgemäß)

Entsprechend den Bedingungen von Beispiel 1 werden 27,5 g (= 0,0438 Mol) eines Polyethers mit der mittleren Formel

CH₂=CH-CH₂O-(C₂H₄O-)₁₀(C₃H₆O-)₂CH₃ (Typ B)

und 327,0 g (= 0,0813 Mol) eines Polyethers mit der mittleren Formel

CH₂=CH-CH₂O-(C₂H₄O-)₄₅(C₃H₆O-)₃₄CH₃ (Typ B)

mit 80,4 g (= 0,1 Mol SiH) eines Siloxans mit der durchschnittlichen Formel

(CH₃)₃SiO-[(CH₃)₂SiO-]₅₈[(CH₃)HSiO-]₆Si(CH₃)₃

unter Zusatz von 450 ml Toluol (davon 150 ml Toluol zum azeotropen Trocknen) in Gegenwart von 0,25 g einer 10 %igen Lösung von H₂PtCl₆.6H₂O in i-Propanol umgesetzt. Der SiH-Umsatz erreicht 98,8 %.

### Beispiel 7 (nicht erfindungsgemäß)

Entsprechend den Bedingungen von Beispiel 1 werden 19,4 g (= 0,0125 Mol) eines Polyethers mit der mittleren Formel

CH₂=CH-CH₂O-(C₂H₄O-)₂₃(C₃H₆O-)₈CH₃ (Typ B),

73,6 g (= 0,05 Mol) eines Polyethers mit der mittleren Formel

CH₂=CH-CH₂O-(C₂H₄O-)₁₆(C₃H₆O-)₁₂CH₃ (Typ B),

75,5 g (= 0,05 Mol) eines Polyethers mit der mittleren Formel

CH₂=CH-CH₂O-(C₂H₄O-)₅(C₃H₆O-)₂₁CH₃ (Typ C)

und 32,1 g (= 0,0125 Mol) eines Polyethers mit der mittleren Formel

CH₂=CH-CH₂O-(C₃H₆O-)₄₃CH₃ (Typ C)

mit 87,7 g (= 0,1 Mol SiH) eines Siloxans mit der durchschnittlichen Formel

(CH₃)₃SiO-[(CH₃)₂SiO-]₁₃₀[(CH₃)HSiO-]₁₂Si(CH₃)₃

unter Zusatz von 400 ml Toluol (davon 150 ml zum azeotropen Trocknen) in Gegenwart von 0,2 g einer 10 %igen Lösung von H₂PtCl₆.6H₂O in i-Propanol umgesetzt. Der SiH-Umsatz erreicht 98,4 %.

Die anwendungstechnische Prüfung der hergestellten Schaumstoffstabilisatoren erfolgt mit einer Schaumrezeptur auf folgende Weise:

Jeweils 300 Teile eines handelsüblichen Polyethers zur Herstellung von flexiblen Urethanschaumstoffen, welcher im mittleren Molekül drei Hydroxylgruppen aufweist und ein Molekulargewicht von 3500 hat, werden mit 15 Teilen Wasser, 30 Teilen eines physikalischen Treibmittels, der entsprechenden Menge des zu testenden Schaumstoffstabilisators, 0,33 Teilen Diethylentriamin und 0,6 Teilen Zinnoctoat unter gutem Rühren vermischt. Nach Zugabe von 125 Teilen Toluoldiisocyanat (Isomerengemisch 2,4 und 2,6 im Verhältnis 4 : 1) wird mit einem Glattrührer 7 Sek. bei 3000 U/Min. gerührt und das Gemisch in einen Kasten gegossen. Es entsteht ein feinporiger Schaumstoff, von dem folgende Daten gemessen werden:
1. Das Rücksacken des Schaumstoffes am Ende der Steigphase (in nachfolgender Tabelle mit "Rückfall" angegeben).
2. Die Zahl der Zellen pro Zentimeter Schaum wird unter einem Mikroskop ausgezählt.

In der nachfolgenden Tabelle sind jeweils drei Meßwerte für drei verschiedene Konzentrationen im Verhältnis 1,8 : 1,3 : 1,0 sowohl für erfindungsgemäße (Beispiele 1 bis 5) als auch nicht erfindungsgemäße (Beispiele 6 und 7) Stabilisatoren angegeben.

| Beispiel | Rückfall | Zellen pro cm |
|---|---|---|
| 1 | 0,4/0,7/1,1 | 13/12/12 |
| 2 | 1,0/1,2/1,6 | 15/14/14 |
| 3 | 0,7/0,9/1,2 | 15/15/14 |
| 4 | 1,1/1,3/1,6 | 12/12/12 |
| 5 | 0,3/0,7/0,9 | 15/14/14 |
| 6 | 0,2/0,3/1,9 | 06/05/04 |
| 7 | 2,1/2,5/3,3 | 16/15/13 |

Es ist somit durch den Einsatz der erfindungsgemäßen Blockmischpolymerisate als aktive Schaumstabilisatoren bei der Herstellung von Polyurethanschäumen möglich, Schäume mit deutlich feinerer Zellstruktur bei geringem Rückfall zu erhalten, als dies nach dem Stand der Technik möglich war.

## Patentansprüche

1. Polysiloxan-Polyoxyalkylen-Blockmischpolymerisat mit unterschiedlichen Polyoxyalkylenblöcken im durchschnittlichen Molekül, gekennzeichnet durch die allgemeine Formel 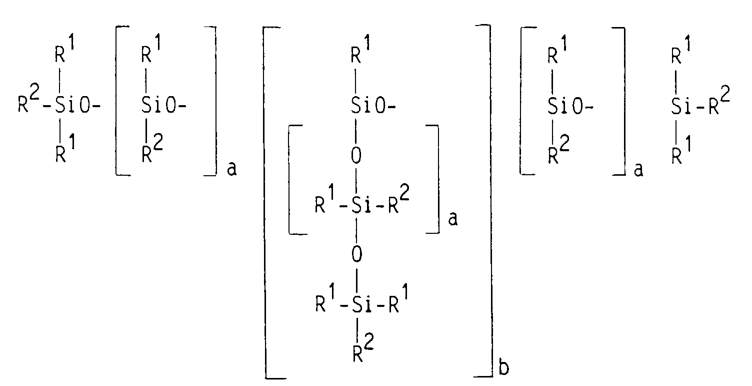 wobei
R¹ ein Alkylrest mit 1 bis 4 Kohlenstoffatomen oder ein Phenylrest ist, jedoch mindestens 90 % der Reste R¹ Methylreste sind,
R² die Bedeutung des Restes R¹ oder des Restes -R⁴ ₓO-R³ hat, wobei
R⁴ ein zweiwertiger Alkylenrest, der auch verzweigt sein kann, ist,
x einen Wert von 0 oder 1 hat und
R³ ein Gemisch von
(a) mindestens einem Polyoxyalkylenrest A eines mittleren Molgewichtes von 350 bis 6000, bestehend aus > 90 bis 100 Gew.-% Oxyethyleneinheiten und 0 bis < 10 Gew.-% Oxypropyleneinheiten,
(b) mindestens einem Polyoxyalkylenrest B eines mittleren Molgewichtes von 700 bis 5500, bestehend aus 30 bis 90 Gew.-% Oxyethyleneinheiten und 70 bis 10 Gew.-% Oxypropyleneinheiten, und gegebenenfalls
(c) einem oder mehreren Polyoxyalkylenrest(en) C eines mittleren Molgewichtes von 500 bis 5000, bestehend aus 0 bis < 30 Gew.-% Oxyethyleneinheiten und 100 bis > 70 Gew.-% Oxypropyleneinheiten,
mit der Maßgabe, daß
(1) im durchschnittlichen Blockmischpolymerisat mindestens ein Rest -R⁴ ₓOR³ vorhanden ist,
(2) im durchschnittlichen Blockmischpolymerisat mindestens 3 Polyoxyalkylenreste unterschiedlichen mittleren Molekulargewichtes und/oder unterschiedlichen Oxyethylengehaltes vorhanden sind und
(3) wenn kein Polyoxyalkylenrest C vorhanden ist, der Polyoxyalkylenrest A ein mittleres Molekulargewicht von 700 nicht unterschreiten darf, und
(4) wenn Polyoxyalkyenreste A und C vorhanden sind, mindestens einer dieser Reste ein mittleres Molekulargewicht von 700 nicht unterschreiten darf,
(5) das Verhältnis der Polyoxyalkylenreste A : B : C (in Mol-%) 5 bis 60 : 10 bis 95 : 0 bis 80, wobei die Summe der Mol-% 100 ergeben muß, beträgt,
b einen Wert von 0 bis 10 hat,
a einen Wert von 10 bis 100 hat, wenn b = 0 ist, oder
einen Wert von 3 bis 70 hat, wenn b > 0 und ≤ 4 ist, oder
einen Wert von 3 bis 30 hat, wenn b > 4 ist.

2. Blockmischpolymerisat nach Anspruch 1, dadurch gekennzeichnet, daß in den Polyoxyalkylenresten B und C jeweils bis zu 20 Gew.-% der Oxypropyleneinheiten durch Oxybutyleneinheiten ersetzt sein können.

3. Blockmischpolymerisat nach Anspruch 1 oder 2, dadurch gekennzeichnet, daß das Verhältnis der Polyoxyalkylenreste A : B : C (in Mol-%) 5 bis 40 : 20 bis 60 : 40 bis 75, wobei die Summe der Mol-% 100 ergeben muß, beträgt.

4. Blockmischpolymerisat nach Anspruch 1 oder 2, dadurch gekennzeichnet, daß das Verhältnis der Polyoxyalkylenreste A : B : C (in Mol-%) 10 bis 30 : 20 bis 40 : 50 bis 75, wobei die Summe der Mol-% 100 ergeben muß, beträgt.

5. Blockmischpolymerisat nach einem oder mehreren der vorhergehenden Ansprüche, dadurch gekennzeichnet, daß die Polyoxyalkylenreste A, B und C der Formel (CₘH₂ₘO-)ₙR⁵ entsprechen, wobei die Indices n und m so gewählt sind, daß die Bedingungen hinsichtlich der Zusammensetzung und des jeweiligen Molgewichtes der verschiedenen Polyoxyalkylenreste erfüllt sind, und R⁵ ein Wasserstoffrest, ein Alkylrest mit 1 bis 4 Kohlenstoffatomen, ein Acylrest oder ein -O-CO-NH-R⁶-Rest, wobei R⁶ einen Alkylrest mit 2 bis 6 Kohlenstoffatomen oder einen Arylrest bedeutet, ist.

6. Verwendung der Blockmischpolymerisate gemäß Anspruch 1 bis 5 als Stabilisatoren für die Herstellung von flexiblen Polyurethanschaumstoffen.

## Claims

1. Polysiloxane-polyoxyalkylene block copolymer containing different polyoxyalkylene blocks in the average molecule, characterized by the general formula 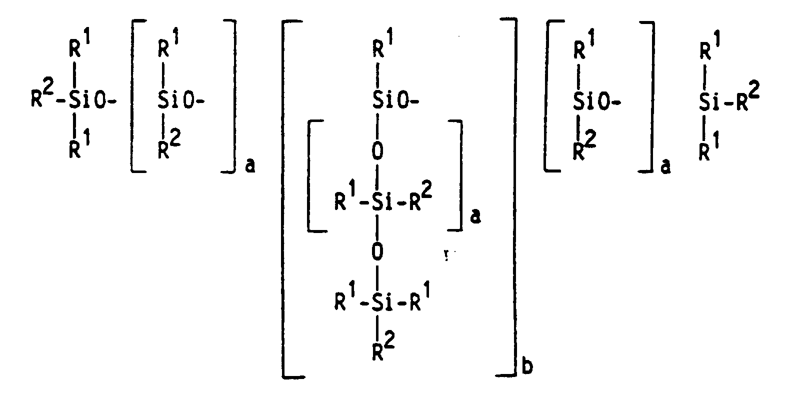 where
R¹ is an alkyl radical having from 1 to 4 carbon atoms or a phenyl radical, but at least 90% of the radicals R¹ are methyl radicals,
R² is as defined for R¹ or is a radical -R⁴ ₓO-R³, where R⁴ is a divalent alkylene radical which can also be branched,
x is 0 or 1 and
R³ is a mixture of
(a) at least one polyoxyalkylene radical A which has a mean molecular weight of from 350 to 6000 and comprises from > 90 to 100% by weight of oxyethylene units and from 0 to < 10% by weight of oxypropylene units,
(b) at least one polyoxyalkylene radical B which has a mean molecular weight of from 700 to 5500 and comprises from 30 to 90% by weight of oxyethylene units and from 70 to 10% by weight oxypropylene units, and, if desired,
(c) one or more polyoxyalkylene radical(s) C which has/have a mean molecular weight of from 500 to 5000 and comprise from 0 to < 30% by weight of oxyethylene units and from 100 to > 70% by weight of oxypropylene units,
with the proviso that
(1) at least one radical -R⁴ ₓOR³ is present in the average block copolymer,
(2) at least three polyoxyalkylene radicals having different mean molecular weights and/or different oxyethylene contents are present in the average block copolymer and
(3) if no polyoxyalkylene radical C is present, the polyoxyalkylene radical A must have a mean molecular weight of not less than 700, and
(4) if polyoxyalkylene radicals A and C are present, at least one of these radicals must have a mean molecular weight of not less than 700,
(5) the ratio of the polyoxyalkylene radicals A : B : C (in mol%) is 5-60 : 10-95 : 0-80, where the sum of the mol% must be 100,
b is from 0 to 10,
a is from 10 to 100 when b = 0, or
is from 3 to 70 when b > 0 and ≤ 4, or
is from 3 to 30 when b > 4.

2. Block copolymer according to Claim 1, characterized in that in the polyoxyalkylene radicals B and C in each case up to 20% by weight of the oxypropylene units can be replaced by oxybutylene units.

3. Block copolymer according to Claim 1 or 2, characterized in that the ratio of the polyoxyalkylene radicals A : B : C (in mol%) is 5-40 : 20-60 : 40-75, where the sum of the mol% must be 100.

4. Block copolymer according to Claim 1 or 2, characterized in that the ratio of the polyoxyalkylene radicals A : B : C (in mol%) is 10-30 : 20-40 : 50-75, where the sum of the mol% must be 100.

5. Block copolymer according to one or more of the preceding claims, characterized in that the polyoxyalkylene radicals A, B and C correspond to the formula (CₘH₂ₘO-)ₙR⁵, where the indices n and m are selected such that the conditions in respect of the composition and the respective molecular weight of the various polyoxyalkylene radicals are met, and R⁵ is a hydrogen radical, an alkyl radical having from 1 to 4 carbon atoms, an acyl radical or a -O-CO-NH-R⁶ radical, where R⁶ is an alkyl radical having from 2 to 6 carbon atoms or an aryl radical.

6. Use of the block copolymers according to Claims 1 to 5 as stabilizers for producing flexible polyurethane foams.

## Revendications

1. Polymère segmenté de polysiloxane-polyoxyalcoylène avec des segments différents de polyoxyalcoylène dans la molécule moyenne, caractérisé par la formule générale : 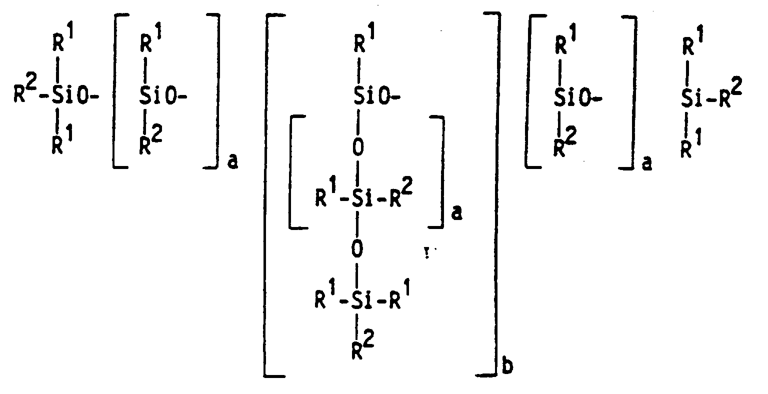 dans laquelle :
R¹ est un radical alcoyle avec 1 à 4 atomes de carbone ou un radical phényle, 90% au moins des radicaux R¹ étant toutefois des radicaux méthyle;
R² a la signification du radical R¹ ou du radical -R⁴ ₓO-R³, dans lequel :
R⁴ est un radical alcoylène bivalent, qui peut également être ramifié;
x a une valeur de 0 ou 1, et
R³ est un mélange de
(a) au moins un radical polyoxyalcoylène A d'un poids moléculaire moyen de 350 à 6000, composé de >90 à 100% en poids d'unités oxyéthylène et 0 à <10% en poids d'unités oxypropylène;
(b) au moins un radical polyoxyalcoylène B d'un poids moléculaire moyen de 700 à 5500, composé de 30 à 90% en poids d'unités oxyéthylène et 70 à 10% en poids d'unités oxypropylène et, le cas échéant,
(c) un ou plusieurs radicaux polyoxyalcoylène C d'un poids moléculaire moyen de 500 à 5000, composés de 0 à <30% en poids d'unités oxyéthylène et 100 à >70% en poids d'unités oxypropylène,
avec la condition que
(1) il existe au moins un radical R⁴ₓOR³ dans le copolymère segmenté moyen;
(2) il existe au moins 3 radicaux polyoxyalcoylène de poids moléculaires moyens différents et/ou de teneurs en oxyéthylène différentes dans le copolymère segmenté moyen, et
(3) lorsqu'il n'existe pas de radical polyoxyalcoylène C, le poids moléculaire moyen du radical polyoxyalcoylène A ne peut être inférieur à 700, et
(4) lorsque les radicaux polyoxyalcoylène A et C existent, l'un au moins de ces radicaux ne peut avoir un poids moléculaire moyen inférieur à 700,
(5) le rapport des radicaux polyoxyalcoylène A:B:C (en % en moles) est de 5 à 60:10 à 95:0 à 80, la somme des % en mole devant valoir 100,
b a une valeur de 0 à 10;
a a une valeur de 10 à 100, lorsque b=0, ou
a une valeur de 3 à 70, lorsque b>0 et ≤4, ou
a une valeur de 3 à 30, lorsque b>4.

2. Copolymère segmenté suivant la revendication 1, caractérisé en ce que dans les radicaux polyoxyalcoylène B et C, dans chaque cas jusque 20% en poids des unités oxypropylène peuvent être remplacés par des unités oxybutylène.

3. Copolymère segmenté suivant la revendication 1 ou 2, caractérisé en ce que le rapport des radicaux polyoxyalcoylène A:B:C (en % en moles) est de 5 à 40:20 à 60:40 à 75, la somme des % en moles devant valoir 100.

4. Copolymère segmenté suivant la revendication 1 ou 2, caractérisé en ce que le rapport des radicaux polyoxyalcoylène A:B:C (en % en moles) est de 10 à 30:20 à 40:50 à 75, la somme des % en moles devant valoir 100.

5. Copolymère segmenté suivant une ou plusieurs des revendications précédentes, caractérisé en ce que les radicaux polyoxyalcoylène A, B et C correspondent à la formule (CₘH₂ₘO-)ₙR⁵, les indices m et n étant choisis de telle sorte que les conditions concernant la composition et les poids moléculaires respectifs des différents radicaux polyoxyalcoylène soient remplies, et R⁵ étant un radical hydrogène, un radical alcoyle avec 1 à 4 atomes de carbone, un radical acyle ou un radical -O-CO-NH-R⁶, R⁶ représentant un radical alcoyle avec 2 à 6 atomes de carbone ou un radical aryle.

6. Utilisation des copolymères segmentés suivant les revendications 1 à 5 comme stabilisateurs pour la fabrication de mousses flexibles en polyuréthanne.
